Europäisches Patentamt

European Patent Office

Office européen des brevets

(11) Publication number: **0 095 242**
**A2**

# (12) EUROPEAN PATENT APPLICATION

(21) Application number: 83302181.9

(22) Date of filing: 18.04.83

(51) Int. Cl.³: **A 01 N 25/02**
**A 01 N 43/50, A 01 N 43/64**

(30) Priority: 17.05.82 GB 8214337

(43) Date of publication of application:
30.11.83 Bulletin 83/48

(84) Designated Contracting States:
AT BE CH DE FR GB IT LI NL SE

(71) Applicant: IMPERIAL CHEMICAL INDUSTRIES PLC
Imperial Chemical House Millbank
London SW1P 3JF(GB)

(72) Inventor: Middleton, Michael Robert
22 Walden Avenue Aborfield Cross
Reading Berkshire(GB)

(74) Representative: Bishop, Nigel Douglas et al,
Imperial Chemical Industries PLC Legal Department:
Patents Thames House North Millbank
London SW1P 4QG(GB)

(54) Fungicidal compositions and methods of treating seeds and combating fungal pest therewith.

(57) Liquid homogeneous pesticidal compositions comprise at least one basic nitrogen containing fungicide in association with an organic acid and a polar organic solvent, suitable for use as seed treatments or, after dilution, as foliar sprays.

EP 0 095 242 A2

Croydon Printing Company Ltd.

This invention relates to pesticidal compositions, comprising as active ingredients basic nitrogen containing pesticides having utility principally as fungicides.

Crop seeds are usualy treated with pesticides prior to planting to prevent pests, especially fungal pests, from attacking the seeds when planted. Failure to treat the seeds properly can lead to a poor germination rate and thus to lower crop yields. Because of the relative insolubility of many fungicides suitable for combating seed borne diseases in suitable organic solvents or water, powders or heterogeneous liquid preparations have had to be used to treat the seeds. These have not always been satisfactory in use; for example powder formulations do not always adhere well to the seed coat and the dusty fines produced by the treatment process can represent a potential health hazard to the process operatives so that costly dust extraction and recovery apparatus has to be used.

Recently a number of fungicides based on triazole and imidazole compounds and similar highly basic compounds have come into use as seed treatment agents.

Known compositions of such basic fungicides formulated as wettable powders or suspension concentrates are not always suitable for use as seed treatments because they may lack sufficient stability to be stored for a sufficient length of time prior to use. This is particularly true when such compositions comprise a mixture of active ingredients of differing basicity since if one is used in the form of a salt with a mineral acid (as is frequently the case) precipitation of one or more ingredients occurs on storage.

Furthermore the heterogeneous nature of these compositions makes it difficult to apply them to the seeds in a satisfactory manner which provides an adequate and even coating of the pesticide on the seeds. When the composition on coated seeds dries there remain particles of pesticide adhering to the surface, but the adhesion is not always sufficient to prevent the particles being dislodged when the seeds collide with each other or with the surface of machinery used to process the treated seed and at planting. Consequently there may be insufficient pesticide on the seed to adequately prevent or control fungal infection occurring thereafter.

Many of these difficulties could be overcome if the pesticides concerned could be formulated into homogeneous liquid compositions in a medium which would allow adequate and even coating and penetration of the seed coating. Such a composition should preferably be capable of incorporating both water soluble and water insoluble pesticides in the same preparation. However, simple salts of basic nitrogen-containing fungicides with mineral acids are insufficiently soluble in water or organic solvents to form homogeneous compositions and such fungicides in he form of the free base are insufficiently soluble in water to form homogeneous aqueous preparations.

The present invention is concerned with pesticidal compositions, suitable for use as seed treatments, which overcome these disa vantages and possess adequate storage stability.

Certain of the compositions may also be directly diluted with water for application by conventional spraying means to plant foliage thus permitting a single formulation to be used for both seed treatment and foliage application which is an advantage not possessed by the seed treatment compositions known hitherto.

Accordingly the present invention provides a liquid homogeneous pesticidal composition comprising one or more basic nitrogen containing pesticidally active ingredients in association with an organic acid and a polar solvent.

The compositions of the present invention preferably comprise at least one fungicide containing an imidazole or triazole group, and more preferably comprise a mixture of two such compounds, optionally in the presence of a further fungicidally active ingredient of a different type.

Suitable fungicides containing an imidazole or triazole group for use in the compositions of the invention include those described in, for example, the following published patents and patent applications, the disclosures of which are hereby incorporated by reference thereto:

UK Patent Specifications Nos. 1318590, 1418430, 1460772, 1522657, 1533748, 1595699, 1364619, 1418430, 1601453, US Patent No. 3862950, and European published Patent Application No. 0015756.

Examples of such fungicides containing imidazole or triazole groups include the following compounds:-

- 4 -

0095242

2-allyloxy-2-(2,4-dichlorophenyl)-1-(imidazol-1-yl)-ethane (imazalil),

2-cyano-2-phenyl-1-(imidazole-1-yl)-hexane (fenaponil),

N-n-propyl N-2-(2,4,6-trichlorophenoxy)ethyl imidazol-1-yl carboxamide (prochloraz),

2-(biphenyl-4-yloxy) -1-t-butyl-2-(1,2,4-triazol-1-yl) ethanol (bitertanol),

3-(2,4-dichlorophenyl) -1-t-butyl-2-(1,2,4-triazol-1-yl) propan-1-ol (diclobutrazol),

2-(2,4-dichlorophenyl)-4-n-propyl-2-(1,2,4-triazol-1-yl)-1,3-dioxolane (propiconazole),

2-(2,4-dichlorophenyl)-4-ethyl-2-(1,2,4-triazol-1-yl)-1,3-dioxolane (etaconazole),

1-(α,α-diphenyl-3-trifluoromethylbenzyl)-1,2,4-triazole (fluotrimazole),

1-(4-chlorophenoxy)-3,3-dimethyl-1-(1,2,4-triazol-1-yl) butan-2-one (triadimefon),

1-(4-chlorophenoxy)-3,3-dimethyl-1-(1,2,4-triazol-1-yl) butan-2-ol (triadimenol),

3-hydroxy-2,2,7,7-tetramethyl-4-(1,2,4-triazol-1-yl)octan-6-one,

1-(2-fluorophenyl)-1-(4-fluorophenyl)-2-(1,2,4-triazol-1-yl)ethanol, (hereinafter "compound A"),

1-(2-chlorophenyl)-1-(4-fluorophenyl)-2-(1,2,4-triazol-1-yl)ethanol, (hereinafter "compound B"),

2-(2,4-dichlorophenyl)-1-(1,2,4-triazol-1-yl)hexan-2-ol.

and similar compounds.

Amongst other basic nitrogen containing fungicides which may be used as active ingredients in the invention compositions and other fungicides which may be optionally be present in addition to such basic nitrogen containing fungicides there may be mentioned the following: triforine, fenarimol, nuarimol, triarimol, dodemorph, fenpropimorph, tridemorph, carbendazim, thiophanate-methyl, thiabendazole, ethirimol and the like.

Organic acids which are particularly useful in the present invention include alkylated benzene sulphonic acids containing from 1 to 20 carbon atoms in the alkyl moiety such as for example dodecylbenzene sulphonic acid (DBSA) or xylene sulphonic acid, or hydroxylated carboxylic acids containing from 2 to 10 carbon atoms such as for example lactic acid. The choice of the most appropriate acid depends upon the intended use of the composition. Thus when the composition is intended for use as a seed treatment then either hydroxylated carboxylic acids or alkylated benzene sulphonic acids may be used, but if the composition is intended to be diluted with water to produce a sprayable composition for application to the foliar parts of growing plants then the alkylated benzene sulphonic acids are particularly preferred.

Polar solvents which are particularly useful in the invention compositions include glycol ethers, for example diethylene glycol monoethyl ether or dipropylene glycol monomethyl ether, and tetrahydrofurfuryl alcohol (THFA). Although non-aqueous formulations are particularly preferred formulations containing some water in association with the polar solvent are also encompassed within the scope of the present invention.

Formulations intended for use as seed treatments may contain in addition to the above mentioned ingredients a sticker, such as for example linseed oil, to assist adhesion of the product to the seed, and a water soluble non-phytotoxic dyestuff to indicate the efficacy of the seed treating process.  Suitable dyestuffs include, for example, those sold under the trade names "Lissamine" scarlet, "Lissamine" orange and "Durazol" red. ("Lissamine" and "Durazol" are registered trade marks of Imperial Chemical Industries PLC).

It has been found that seed treated with the invention compositions often has a higher rate of germination that seed treated with non-homogenous formulations of the same fungicides.  The foliar application of the invention compositions containing alkylated benzene sulphonic acids (especially dodecylbenzene sulphonic acid) in many cases leads to an improvement in fungicidal activity compared with that obtained with a conventional wettable powder composition.

In one preferred form the invention provides a liquid homogeneous pesticidal composition for use in seed treatment comprising as active ingredient at least one fungicidal compound selected from fungicidal compounds containing a triazole or imidazole group in association with an organic acid selected from alkylated benzene sulphonic acids and hydroxylated carboxylic acids, and a polar solvent selected from glycol ethers and tetrahydrofurfuryl alcohol, and optionally comprising one or more of a sticker, a water soluble dyestuff, and another fungicide.

In another preferred form the invention provides a liquid homogenous pesticidal composition for use, after dilution with water, as a spray applied foliar fungicide comprising at least one fungicidal compound selected from fungicidal compounds containing a triazole or imidazole group in association with an organic acid selected from alkylated benzene sulphonic acids and a polar solvent selected from glycol ethers and tetrahydrofurfuryl alcohol, and optionally comprising another fungicide, and optionally comprising a surfactant.

Particularly useful fungicidal compounds containing a triazole or imidazole group for use in these two preferred forms of the invention are imazalil and 1-(2-fluorophenyl)-1-(4-fluorophenyl)-2-(1,2,4-triazol-1-yl)ethanol. A preferred optional additional fungicide is thiabendazole (2-thiazol-4-yl)-1H-benzimidazole).

The invention compositions may contain up to 30% by weight of the fungicidal compound or compounds but preferably contain from 3 to 25% by weight. They may also contain from up to 45% by weight of the alkylated benzene sulphonic acid but preferably contain from 5 to 40% by weight. It is preferred that the amount of acid present in the formulation is not less than a molar equivalent with respect to the total molar amount of basic pesticides present. The balance of the compositions may be made up entirely of the polar solvent or may optionally contain one or more conventional surfactants, spreaders, stickers or, as mentioned hereinabove for seed treatments, a water soluble dyestuff. Where a surfactant is used it is preferably a non-ionic surfactant e.g. those obtained by condensing aliphatic alcohols or alkylated phenols with ethylene oxide and/or propylene oxide.

The compositions may be prepared by mixing the various ingredients together with agitation or stirring optionally with slight warming of the mixing vessel to assist the rapid production of a clear solution. Once prepared the compositions are stable to a wide variety of storage conditions, for example over a temperature range from -40° to +30° without deterioration.

The compositions may be used to combat fungal pests in ways which are conventional in the art. Thus the undiluted compositions may be used to treat seed, eg cereal seed, in conventional seed treating apparatus, or they may be spray applied after dilution to the foliage of growing plants infested or infected with the pests or susceptible to such infestation or infection using conventional spray apparatus. In a further aspect this invention provides a method of treating seeds to render them less susceptible to fungal attack which comprises applying the invention compositions to the seeds prior to planting the seeds.  It also provides a method of combating fungal pests on plant foliage which comprises spraying the foliage with an effective amount of an aqueous preparation obtained by dilution of an invention composition with water.

Fungal pests which may be controlled by the use·of the invention compositions include, for example, the following diseases:

Puccinia recondita, Puccinia striiformis and other rusts on wheat, Puccinia hordei, Puccinia striiformis and other rusts on barley, and rusts on other hosts eg coffee, apples, vegetables and ornamental plants;
Erysiphe graminis (powdery mildew) on barley and wheat and other powdery mildews on various hosts such as Sphaerotheca fuliginea on cucurbits (eg cucumber), Podosphaera leucoricha on apples and Uncinula necator on vines;
Helminthosporium spp. and Rhynchosporium spp. on cereals;
Cercospora arachidicola on peanuts and other Cercospora species on for example sugar beet, bananas and soya beans
Botrytis cinerea (grey mould) on tomatoes, strawberries, vines and other hosts;
Venturia inaequalis (scab) on apples;
Fusarium spp., Septoria spp., Tilletia spp. (ie bunt, a seed borne disease of wheat), Ustilago spp., Helminthosporium spp. on cereals, Rhizoctonia solani on cotton and Corticium sasakii on rice.

The invention is further illustrated by the following examples of compositions according to the invention.

## EXAMPLE 1

The following ingredients were mixed together to form seed treating compositions:-

- 9 -                                    0095242

|  |  | % w/w |
|---|---|---|
| (a) | Compound A | 12.5 |
|  | DBSA | 20.0 |
|  | Linseed Oil | 2.5 |
|  | "Lissamine" Scarlet | 0.5 |
|  | Diethylene glycol monoethyl ether | to 100.0 |

|  |  | % w/w |
|---|---|---|
| (b) | Compound A | 18.8 |
|  | DBSA | 30.0 |
|  | Linseed Oil | 2.5 |
|  | "Lissamine" orange | 0.5 |
|  | Diethylene glycol monoethyl ether | to 100.0 |

|  |  | % w/w |
|---|---|---|
| (c) | Compound B | 5.0 |
|  | DBSA | 20.0 |
|  | Linseed Oil | 2.5 |
|  | Diethylene glycol monoethyl ether | to 100.0 |

|  |  | % w/w |
|---|---|---|
| (d) | Imazalil | 1.5 |
|  | Compound A | 15.0 |
|  | Thiabendazole | 2.5 |
|  | DBSA | 30.0 |
|  | "Durazol" red | 0.5 |
|  | THFA | to 100 |

                                        % w/w

(e)  Compound A                          5.0
     Thiabendazole                       2.5
     DBSA                               20.0
     "Lissamine" orange                  0.5
     THFA                           to 100.0

                                        % w/w

(f)  Triadimefon                        10.0
     Imazalil                            2.5
     DBSA                               25.0
     Diethylene glycol
     monoethyl ether                to 100.0

                                        % w/w

(g)  Triadimenol                        12.0
     Imazalil                            2.5
     DBSA                               30.0
     THFA                           to 100.0

                                        % w/w

(h)  Compound A                          5.0
     Lactic acid                        35.0
     THFA                           to 100.0


EXAMPLE 2


The following ingredients were mixed together to form compositions suitable for spray application to the foliar parts of growing cereal crops after dilution with water.

|     |                | % w/w      |
|-----|----------------|------------|
| (a) | Compound A     | 5.0        |
|     | carbendazim    | 5.0        |
|     | DBSA           | 25.0       |
|     | THFA           | to 100.0   |

|     |                           | % w/w      |
|-----|---------------------------|------------|
| (b) | Triadimenol               | 8.5        |
|     | Carbendazim               | 5.0        |
|     | DBSA                      | 30.0       |
|     | Diethylene glycol monoethyl ether | to 100.0 |

|     |                | % w/w      |
|-----|----------------|------------|
| (c) | Compound B     | 7.5        |
|     | Tridemorph     | 5.0        |
|     | DBSA           | 25.0       |
|     | THFA           | to 100.0   |

|     |                | % w/w      |
|-----|----------------|------------|
| (d) | Triadimefon    | 5.0        |
|     | Triforine      | 5.0        |
|     | DBSA           | 20.0       |
|     | THFA           | to 100.0   |

EXAMPLE 3

This Example illustrates concentrated fungicidal compositions suitable for spray application to the foliar parts of growing cereal crops after dilution with water.

|       |                                   | % w/w     |
|-------|-----------------------------------|-----------|
| (a)   | Compound A                        | 30.0      |
|       | DBSA                              | 40.0      |
|       | 'Synperonic' NPE 1800             | 6.0       |
|       | Diethylene glycol monoethyl ether | to 100.0  |

'Synperonic' is a Registered Trade Mark. 'Synperonic' NPE 1800 is a condensate of nonylphenyl with a mixture of ethylene oxide and propylene oxide.

|       |                       | % w/w     |
|-------|-----------------------|-----------|
| (b)   | Compound B            | 25.0      |
|       | DBSA                  | 35.0      |
|       | 'Synperonic' NPE 1800 | 5.0       |
|       | THFA                  | to 100.0  |

|       |                       | % w/w     |
|-------|-----------------------|-----------|
| (c)   | Triadimefon           | 25.0      |
|       | Lactic acid           | 40.0      |
|       | 'Synperonic' NPE 1800 | 5.0       |
|       | THFA                  | to 100.0  |

|       |                                    | % w/w     |
|-------|------------------------------------|-----------|
| (d)   | Triadimenol                        | 30.0      |
|       | DBSA                               | 35.0      |
|       | 'Synperonic' NPE 1800              | 4.5       |
|       | Diethylene glycol monomethyl ether | to 100.0  |

- 13 -

0095242

1. A liquid homogeneous pesticidal composition comprising one or more basic nitrogen containing pesticidally active ingredients in association with an organic acid and a polar organic solvent.

2. A composition according to claim 1 comprising at least one fungicide containing an imidazole or triazole group.

3. A composition according to claim 2 comprising a mixture of two fungicides containing imidazole or triazole groups.

4. A composition according to claim 2 comprising at least one of

   2-allyloxy-2-(2,4-dichlorophenyl)-1-(imidazol-1-yl)-ethane,

   2-cyano-2-phenyl-1-(imidazole-1-yl)-hexane

   N-n-propyl N-2-(2,4,6-trichlorophenoxy)ethyl imidazol-1-yl carboxamide,

   2-(biphenyl-4-yloxy) -1-t-butyl-2-(1,2,4-triazol-1-yl) ethanol,

   3-(2,4-dichlorophenyl) -1-t-butyl-2-(1,2,4-triazol-1-yl) propan-1-ol,

   2-(2,4-dichlorophenyl)-4-n-propyl-2-(1,2,4-triazol-1-yl)-1,3-dioxolane,

   2-(2,4-dichlorophenyl)-4-ethyl-2-(1,2,4-triazol-1-yl)-1,3- dioxolane,

1-(α,α-diphenyl-3-trifluoromethylbenzyl)-1,2,4-triazole,

1-(4-chlorophenoxy)-3,3-dimethyl-1-(1,2,4-triazol-1-yl) butan-2-one,

1-(4-chlorophenoxy)-3,3-dimethyl-1-(1,2,4-triazol-1-yl) butan-2-ol,

3-hydroxy-2,2,7,7-tetramethyl-4-(1,2,4-triazol-1-yl)octan-6-one,

1-(2-fluorophenyl)-1-(4-fluorophenyl)-2-(1,2,4-triazol-1-yl)ethanol,

1-(2-chlorophenyl)-1-(4-fluorophenyl)-2-(1,2,4-triazol-1-yl)ethanol,

and

2-(2,4-dichlorophenyl)-1-(1,2,4-triazol-1-yl)hexan-2-ol.

5. A composition according to claim 1 wherein the pesticidally active ingredient comprises a fungicide selected from the group consisting of triforine, fenarimol, nuarimol, triarimol, dodemorph, fenpropimorph, tridemorph, carbendazim, thiophanate-methyl, thiabendazole and ethirimol.

6. A composition according to claim 1 wherein the organic acid is a alkylated benzene sulphonic acid or a hydroxylated carboxylic acid.

7. A composition according to claim 6 wherein the organic acid is dodecylbenzene sulphonic acid or lactic acid.

- 15 -

0095242

8. A composition according to claim 1 where the polar organic solvent is selected from glycol ethers and tetrahydofurfuryl alcohol.

9. A liquid homogeneous pesticidal composition for use in seed treatment comprising as active ingredient at least one fungicidal compound selected from fungicidal compounds containing a triazole or imidazole group in association with an organic acid selected from alkylated benzene sulphonic acids and hydroxylated carboxylic acids, and a polar solvent selected from glycol ethers and tetrahydrofurfuryl alcohol, and optionally comprising one or more of a sticker, a water soluble dyestuff, and another fungicide.

10. A liquid homogenous pesticidal composition for use, after dilution with water, as a spray applied foliar fungicide comprising at least one fungicidal compound selected from fungicidal compounds containing a triazole or imidazole group in association with an organic acid selected from alkylated benzene sulphonic acids and a polar solvent selected from glycol ethers and tetrahydrofurfuryl alcohol, and optionally comprising another fungicide, and optionally comprising a surfactant.

11. A composition according to claim 1 comprising from 3 to 30% by weight of the fungicidal active ingredient or ingredients and from 5 to 45% by weight of an alkylated benzene sulphonic acid.

12. A method of treating seeds to render them less susceptible to fungal attack which comprises applying an effective amount of a composition according to claim 1 to the seeds prior to planting the seeds.

13.   A method of combating fungal pests on plant foliage
      which comprises spraying the foliage with an effective
      amount of an aqueous preparation obtained by dilution
      of a composition according to claim 1 with water.

NDB/sje
SPEC358